# EUROPEAN PATENT APPLICATION

(11) **EP 1 691 550 A2**
(43) Date of publication of application: **16.08.2006**
(21) Application number: 06250727.2
(22) Date of filing: 10.02.2006
(51) Int. Cl.: H04N 7/16, H04N 7/24

(54) **Interactive video**

(30) Priority: 11.02.2005 GB 0502812
(71) Applicant: Vemotion Limited, Thirsk North Yorkshire YO7 3BX (GB)
(72) Inventor: Antoniou, Tony, Woodford, Kettering NN14 4EY (GB); Mclean, Stewart, Hartlepool, Cleveland TS25 2RH (GB); Howarth, Geoffrey, Thirsk, North Yorkshire Y07 1RY (GB); McCone, Stewart, North Yorkshire DL6 2LY (GB)
(74) Representative: Alton, Andrew

(57) **Abstract**

An interactive video platform, interactive video player and computer implemented methods are described, for providing interactive video on a user device, such as a mobile phone. An item of video content to be displayed is identified and a control file associated with the item of video content is determined. A control command is received from the user device while the video content is being displayed. The control file is read to determine an action to be carried out based on the control command received and the action is carried out. The action can control the item of video content being displayed and/or can cause user interface entities to be displayed allowing the user to interact with the displayed video.

## Description

The present invention relates to interactive video, and in particular to providing user interaction with video being displayed on a user device.

Video images can be displayed on user devices remote from the source of the video. However, typically the video images are of low quality owing to the limited bandwidth available for supplying the video to the device. This can be a particular problem with wireless cellular networks, such as mobile telephone networks, where bandwidth can be particularly scarce.

For example, a remote viewing device can connect directly to a streaming server which can stream video content such as static video content from a pre-recorded encoded video file, or live video content from an encoder taking input from a video camera.

However, some users and applications require interactive functionality to be provided with the associated video images. However, including interactive functionalities requires some of the bandwidth of the network or be sacrificed to control and/or data signals. This can further degrade the video quality experienced by the end user.

It would therefore be advantageous to be able to provide video to remote users which includes interactive functionalities and without significantly degrading the video delivered to the user.

According to a first aspect of the present invention, there is provided a computer implemented method for providing interactive video on a user device. Video content to be displayed on the user device can be identified. A control file associated with the video content can be determined. Control data can be received from the user device. The control file can be read to determine an action or actions to be carried out based on the control data received. The action or actions can be caused to be carried out.

Hence, by providing a control file associated with the video content which determines what actions are to be carried out, very simple control data can be provided by the user device while still providing a broad range of interactive functionality. Hence, very little bandwidth is required for passing the control data.

The method can further comprise notifying the user device of a source of video content to be displayed. In this way the most appropriate source of video content can be identified for the user device.

The control command or control data can includes a key press data item corresponding to a key pressed by the user and/or a key press time data item corresponding to the time during display of the video at which a key was pressed by the user. The control command can comprise a key press data item only or a key press data item and key press time data item only. Hence, a very simple control command format can be used which does not require significant bandwidth.

The method can also include reading the control file to determine a time during display of the video to send a message to the user device and the method can further include sending the message to the user device at the time. Hence, the control file can be used to determine when to send a message to the user device so that a message is displayed at the appropriate time during video display. The message can comprise a text message and/or user interface entity via which a user can enter data or a selection.

The action can comprise sending a message to the user device. This allows messages to be displayed to a user during display of the video to provide information to the user.

The message can include a message body and/or formatting data specifying how the message body should be displayed. Hence, the content and appearance of what is to be displayed can be determined by the message being sent to the user device. The message can specifies a user interface entity to be displayed on the user device.

The message can be a part of a dialogue. The control file can specify what subsequent messages to send during the dialogue dependent on received user input. Hence, the control file can determine how the interaction with the user proceeds dependent on the control commands received from the user in response to a preceding message in the dialogue.

The method can further comprise determining the type of the action and if the action is an action that can be carried out by a native routine of a control process, then the native routine carrying out the action, else determining the location of a routine which can carry out the action and calling the routine to carry out the action. Hence, more complex functionality can be built onto the system by allowing non-native routines to be called to handle new actions.

The control file have a first section specifying rules that are applied to send messages to the user device. The control file can have a second section specifying rules that are applied in handling user inputs received from the user device.

The method can further comprise determining which of a plurality of video sources should act as the source of the video content to be sent to the user device. Connection data can be sent to the user device identifying the address of the video source to which the user device should connect over a network. The connection data can include an IP address and a port number. Determining can further comprise selecting a video source being most likely to provide the highest quality service of the video content to the user device. A quality of service metric can be used to determine which source is likely to provide the highest quality of service. The quality of service metric can be based on a number of factors influencing the ability of the source of video to send video data over the network to the user device.

Selecting can further comprise determining whether all video sources have access to the item of video content. If so, then the video source having a quality of service metric exceeding a threshold and being local to the user device can be selected, or else the video source having a highest quality of service metric but not being local to the user device can be selected. If not, then the video source having a highest quality of service metric can be selected.

The method can further comprise making the control file available to the video source acting as the source of the video content to be sent to the user device. The control file can be transferred over a network to the video source.

According to a further aspect of the invention, there is provided a computer implemented method for displaying interactive video on a user device. Video data can be received from a source of video content over a network. The video data can be displayed as video. A user key press input can be received and user input data including at least the key pressed can be sent over the network to a controller. Control data can be received over the network. The displayed video can be altered as specified by the received control data.

In this way, key presses on the user device can be used to allow the video displayed on the device to be controlled so as to allow the user to interact with the video being displayed.

Altering the displayed video can comprises changing a property of the video content being displayed. Various properties of the video content can be changed. For example, properties relating to the video being displayed can be changed. Alternatively, or additionally, the video content being displayed can be changed to a different item of video content.

Altering the displayed video can comprise adding a user interface entity to the video being displayed. The user interface entity can display information or the user interface entity can allow a user to enter data or enter a command. For example, the command can select an option. This increases the level of interaction of the user with the displayed video.

The method can further comprise receiving further user key press input responsive to the user interface entity. User input data can be sent including at least the further key press data or an alphanumeric string over the network to the controller. Hence, the user can send data back over the network which data can be used by other processes to carry out actions required to service the user interaction.

The method can further comprise receiving connection data over the network identifying the source of video content. The user device can connect to the source of video content over the network, using the connection data. In this way the user device can connect to a more appropriate source of the video content to be viewed. Hence a high quality of video supply service can be provided.

According to a further aspect of the invention, there is provided an interactive video platform for providing interactive video on a user device over a network. The interactive video platform can be configured by computer program code to: identify video content to be displayed on the user device; determine a control file associated with the video content; receive a control command from the user device; read the control file to determine an action to be carried out based on the control command received; and cause the action to be carried out.

The platform can further comprise a plurality of streaming servers in communication with the network for streaming encoded video data over the network.

The platform can further comprise a source of live video content. The source of live video content can include a video camera. The source of live video content can comprise a live feed from a television channel.

The platform can further comprise a store of recorded items of video content. The recorded items can be encoded.

The platform can further comprise a control file for each item of video content.

The platform can include a database storing details of the items of video content available from the platform and information about the control files associated with the items of video content. The information can include the storage address of the control files.

Some of the plurality of streaming servers can be local to a control server. The rest can be non local to the control server. The streaming servers can be connected to a file server storing recorded video content and/or associated control files via a local area network or via a wide area network.

Each streaming server can have access to the control files associated with the items of video content that a streaming server can supply.

According to a further aspect of the invention, there is provided a user communication device for displaying interactive video. The device can comprise a display and an interactive video player. The interactive video player can be implemented by a data processor configured by computer program code to: receive video data from a source of video content over a network; display the video content to a user; receive user key press input and send user input data including at least the key pressed over the network to a controller; receive control data from the controller over the network; and alter the displayed video as specified by the received control data.

According to further aspects of the invention, there is provided computer program code executable by a data processing device or devices to provide any of the method, platform or aspects of claim the invention. A computer program product, comprising a computer readable medium bearing such computer program code is also provided as an aspect of the invention.

An embodiment of the invention will now be described, by way of example only, and with reference to the accompanying drawings, in which:
Figure 1 shows a schematic diagram of a platform for delivering interactive video according to the invention;
Figure 2 shows a high level flow process flow chart illustrating client or user side operations carried out on the platform shown in Figure 1 according to the invention;
Figure 3 shows a high level process flow chart illustrating server side operations carried out on the platform shown in Figure 1 according to the invention;
Figure 4 shows a process flow chart illustrating parts of the process illustrated in Figure 2 in greater detail;
Figure 5 shows a process flow chart illustrating authentication and user registration parts of the process illustrated in Figure 3 in greater detail;
Figure 6 shows a process flow chart illustrating a payment part of the process illustrated in Figure 5;
Figure 7 shows a process flow chart illustrating a cost information process used by the process illustrated in Figure 6 in greater detail;
Figure 8 shows a process flow chart illustrating a payment process used by the process illustrated in Figure 6 in greater detail;
Figure 9 shows a process flow chart illustrating a referral process part of the process illustrated in Figure 3 in greater detail;
Figure 10 shows a process flow chart illustrating an interactive control process used by the process illustrated in Figure 3 in greater detail;
Figure 11 shows a schematic representation of the data structure of a control file according to the invention used by the process illustrated in Figure 10;
Figure 12 shows a process flow chart illustrating operations carried out by a streaming server part of the platform shown in Figure 1;
Figure 13 shows a process flow chart illustrating operations carried out by the player in handling a message from a streaming server;
Figure 14 shows a process flow chart illustrating operations carried out by the control server during a messaging dialogue with the player;
Figure 15 shows a process flow chart illustrating how the control server handles actions in the control file;
Figure 16 shows a process flow chart illustrating in greater detail how the process illustrated in Figure 15 handles non-native actions;
Figure 17 shows a process flow chart illustrating how the control server handles key press user input; and
Figure 18 shows a process flow chart illustrating how the control server handles text user input.

Similar items in different Figures share common reference numerals unless indicated otherwise.

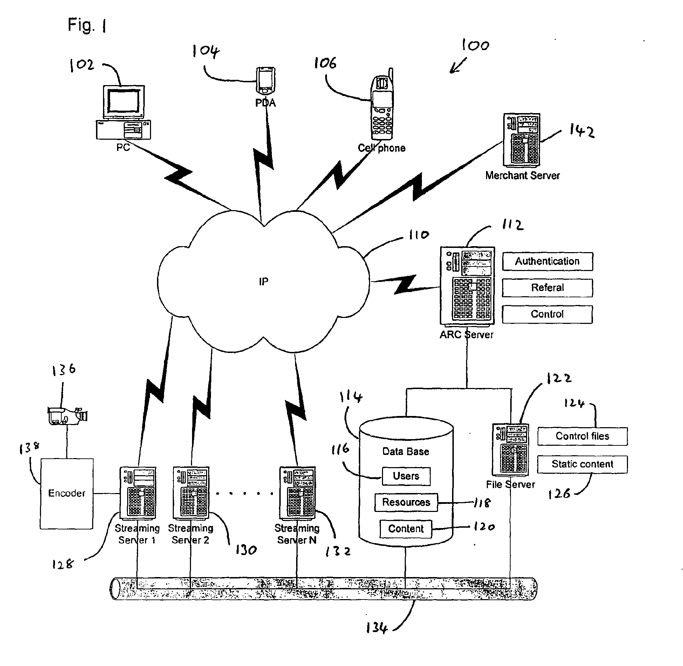

Figure 1 shows a schematic block diagram of an interactive video platform 100 according to the invention, including client side and server side devices and processes also according to the invention. A plurality of different types of user communications devices can be used on the platform, including, for example, a personal computer 102, a personal digital assistant (PDA) 104, or a cellular telephone 106. All that is required is that the communication device has an IP address and has sufficient data processing power to be capable of executing a player application. The player application can display video and can obtain key press information from a keypad, keyboard, screen or other input part of the device. The user communication devices 102,104,106 can connect to the Internet 110 using any suitable connectivity technology, e.g. via PSTN, Wi-Fi or GPRS.

In the following, the description will focus on an embodiment in which the user's communication device is a cellular or mobile telephone, although, as will be apparent from the above, this is by way of example only and the invention is not limited to application on mobile phones. However, significant benefits are provided by the invention for mobile phones owing to the limited bandwidth available for data transmission on current mobile phone networks.

On the server side of the interactive video platform or system, there is provided a control server 112 in communication with the Internet 110. As will be explained in greater detail below, the control server receives and handles user inputs received from the user device to create user interaction with video being displayed on the user device. Control server can also handle user authentication and referral of the user device to a video source and is generally referred to herein as the ARC server 112, although in other embodiments, any of the authentication, referral and control operations can be distributed over other servers.

During interactive video display, key presses on the user device are passed to a socket on the ARC server using TCP. As illustrated in Figure 1, the ARC server 112 includes modules handling user authentication, video source referral and control of user interaction. In one embodiment, the ARC server is built on the Windows 2000, or higher, operating system, using the .NET run time environment and the authentication, referral and control modules are realised as a Windows service. Windows and .NET are trade marks of Microsoft Corporation. The ARC server also includes libraries of routines or methods ("plugins") which may be required by the system, but which are not native to the ARC server application. The ARC server can dynamically load libraries of machine code written to perform a particular action or operation and run them in the ARC server process.

The ARC server 112 is in communication with a database 114 which has various tables storing data relating to registered users 116 of the interactive video service, the resources 118 available to the ARC server and the video content 120 available for streaming to end users. The ARC server is also in communication with a file server 122 which stores a control file 124 for each piece of video content available and also stores files of static (i.e. pre-recorded) video content which has been encoded ready for transmission to an end user. Various video encoding methods can be used and in one embodiment an H.264 codec is used to encode the video to be stored.

The ARC server 112, database 114 and file server 122 are also in communication with a plurality of streaming servers 128, 130, 132, 1 to N, over a local network 134. Each streaming server includes a video streaming application on an operating system and is in communication with the database 114 and the file server 122. In the illustrated embodiment, the streaming servers are local to the ARC server. However, in other embodiments, some or all of the streaming servers can be remote to the ARC server, database and file server and can simply communicate with the database and file server over a network. Hence, in some embodiments, groups of streaming servers are located in different geographic regions, e.g. US, Europe, Asia, Africa, so as to provide content to local users. In order to supply live video content, a video camera 136 for capturing the content is connected to an encoder 138 which uses an H.264 codec to supply the compressed video data to live video streaming server 128. As will be appreciated in practice, the encoder 138 will be implemented in software on streaming server 128.

Plugins are provided to execute various plugin modules which can provide on and off platform services. For off platform services, e.g. credit card payments, the plugins can communicate over a network 110, such as the Internet, with a remote service provider, e.g. a merchant server 142, in order to carry out the off platform service.

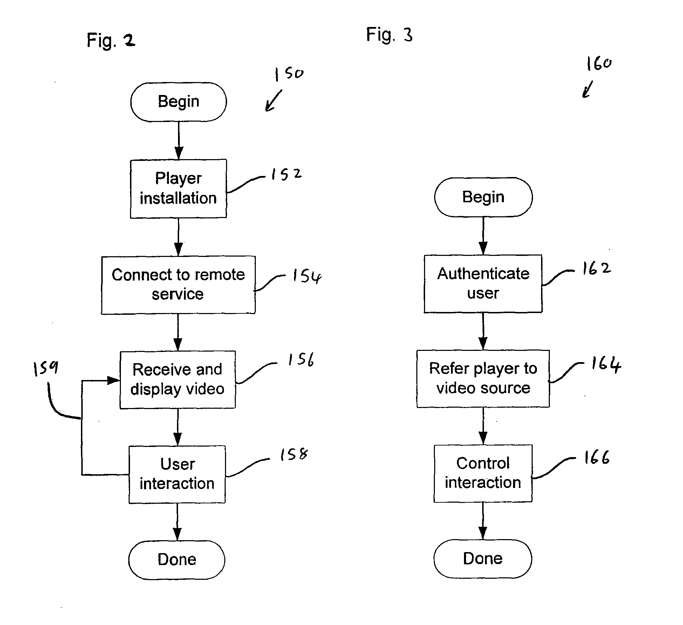

A general overview of the method of operation of the platform will initially be provided, with reference to Figures 2 and 3, before describing the operation of the parts of the platform in greater detail. Figure 2 shows a high level flow chart illustrating various operations carried out during a client or user side process 150 and Figure 3 shows a high level flow chart illustrating various operations carried out by server side processes 160.

If the player is not already installed on the phone, then at step 152 a user installs the player. The phone 106 generally has an operating system including a part for handling basic input and output (BIO) operations and also a part for recognising the type or format of data being received by the phone. The player application sits on the operating system and includes a H.264 codec for decoding video data received by the phone. An API is provided between the player and operating system and the operating system passes received video data and other data to the player and also passes key press data from the devices keyboard or keypad to the player.

The player can be installed on the phone in a number of ways. If the phone includes a web browser, then the player can be downloaded from a url as a binary application file and installed. If the player has been downloaded by a personal computer, then the binary application file can be copied from the personal computer to the phone over a wire based or wireless communications link, e.g. infra red or bluetooth, and installed on the phone.

If the phone is internet enabled, then a message can be sent by SMS, and a web service can use WAP to push the binary application file to the phone for installation.

Then at step 154, the phone can connect to the ARC server which can initially carry out an authentication process 162 to ensure that the user is authorised and can also check whether the user is registered with the service. In some embodiments, authentication and/or registration of users is optional.

The video content to be viewed can be selected by the user or can otherwise be identified. The database 114 includes a file for each item of video content which identifies the control file 124 associated with the item of content 124 and also an .XML description file for configuring the user interface of the player on the remote user device. For the selected content, the referral module of the ARC server determines which streaming server will supply the content and at step 164 re-directs the player on the user's device to the appropriate streaming server.

If static content has been selected then the static video file 126 is transferred from the file server 122 to the streaming server together with the associated XML control file. Alternatively, for live video content, the player is re-directed to connect to the streaming server having the encoder feed supplied to it, *e.g.* streaming server 128. The XML control file 124 associated with the content is loaded on to the ARC server 112. The control file includes instructions indicating what action to carry out dependent on any key presses received at the ARC server and dependent on the time stamp of the content at the time the key press was carried out. Therefore the same key can have different functionalities at different times during display of the content. The control file includes a assembly name (equivalent to an activeX control) identifying a method to be executed. The control file also includes a command to invoke that method and details of any parameters to be passed to the method, *e.g.* credit card details. The details of the control file will be described in greater detail below.

At step 156, the player receives video data, decompresses it and displays video to the user and any user interface elements generated by the control file. If at step 158, the user interacts with the displayed video, e.g. by pressing a key while viewing the video content, then key press is intercepted and passed by the player to a socket on the ARC server using TCP and at step 166 the ARC server control module queries the .XML control file to determine what action to take or method to invoke as a result of that key press. For example, the key press could correspond to an instruction to display a dialogue box, select an option or purchase an item. If a use interface element is to be displayed on the player then a character string is sent to the player which reads the string to determine how to configure and display the user interface element. In the latter case, the ARC server may call a payment processing module in the form of a plugin and pass the relevant parameters to the plugin to effect the credit card payment via an off-platform merchant server 142. The user can continue to interact with the displayed video, as represented by processing loop 159, and the control server continues to handle the actions invoked by the users key presses until the video ends or the user terminates the display of video or closes the player application.

As only key press data and character strings are being sent at the same time that the video is being streamed, the control data requires very little bandwidth and so does not significantly affect the quality of video being displayed.

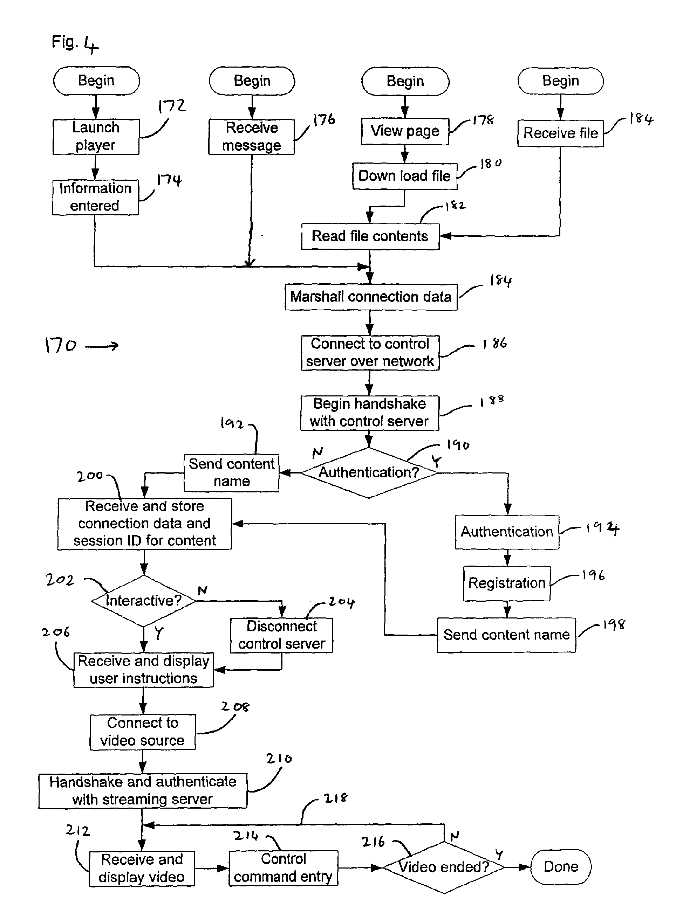

Figure 4 shows a flowchart illustrating a process 170 carried out by the player application on the user device. There are a number of ways in which the player application can be initiated in order to display interactive video. In a first approach, at step 172, the user selects to launch the player application and at step 174 information is entered identifying the video content which the user wants to view.

In another approach, at step 176 an SMS, also referred to as text, message is received at the user's phone which includes information identifying the address of the ARC server and also data identifying the video content to be viewed. In another approach, at step 178, a WAP page can be displayed using the mobile phone and at step 180 a file can be downloaded to the mobile phone, including details of the address for the ARC server and video content to be displayed. Alternatively, at step 184, the mobile phone can receive a file from another device, such as a personal computer, via a wired or wireless connection, such as infrared or blue tooth. Irrespective of how the file is received at the mobile phone, the operating system recognises the file type and passes the file to the player which at step 182 reads the contents of the file. Irrespective of how the ARC server connection data is received, at step 184, the connection data and auxiliary data are marshalled. The ARC server connection data includes the IP address for the ARC server and port number. The data marshalled also includes data identifying the video content to be displayed. In one embodiment, this includes the physical file path of the static video content so that the server does not need to determine the location of the content subsequently. Various auxiliary data items can also be passed in the connection data, including, for example, whether a login protocol is associated with viewing the video content and the size of any buffer to be used for viewing the video content.

At step 186, the user device connects to the control server 112 over the Internet 110 and at step 188 the user device and ARC server are doing a hand shaking procedure to establish communication.

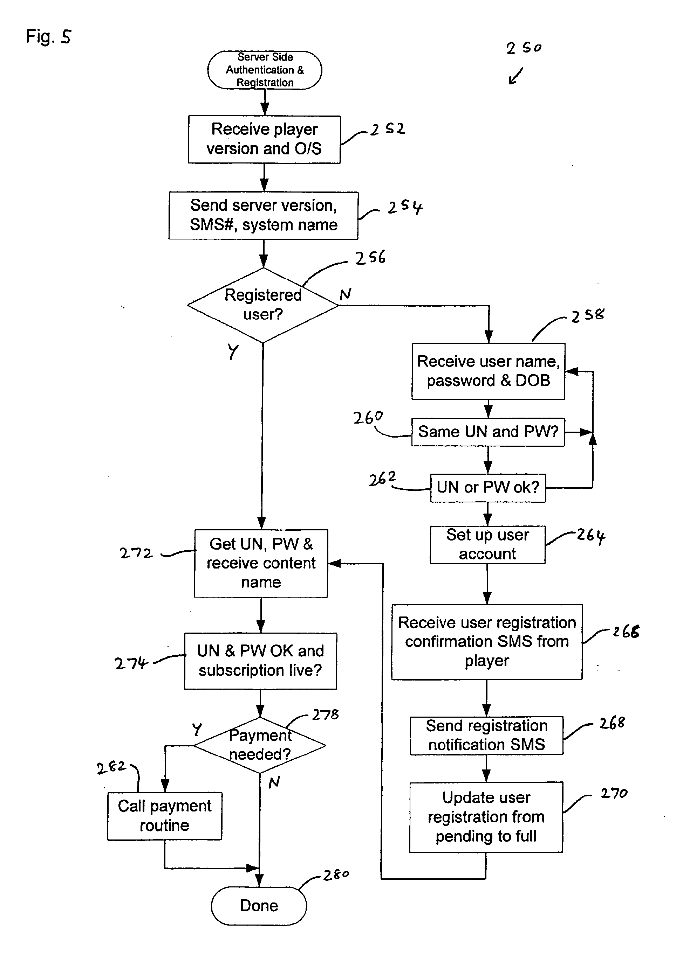

Figure 5 shows a process flowchart illustrating authentication and registration processes 250 carried out by the ARC server 112. At step 252, the ARC server receives data indicating the version player and operating system of the remote device. Using this information, the ARC server can determine the functionalities supported by the player and operating system and ensure that appropriate video and control data is supplied to the player. Then at step 254, the ARC server sends data indicating the version of the ARC server and SMS number for sending SMS messages to the platform and a system name indicating the part or domain of the overall platform to which the device has connected. In some embodiments, a system name or domain name may not be required if the platform comprises a single system or domain. In other embodiments, any one physical platform may host a number of different domains providing different services. The SMS number for the interactive video platform can be used during a user registration procedure as will be described in greater detail below.

Returning to Figure 4. depending on the content to be viewed, authentication of a user may or may not be required. For example, in some instances, the video to be viewed may be made available to a wide number of users in order to encourage the users to view the content in which case any and all users will be automatically authorised to view the content. In other embodiments, user authentication may be required prior to allowing the video content to be viewed. If user authentication is not required then, if data identifying the content to be viewed has not yet been sent from the user device to the ARC server then at step 192 data identifying the content to be viewed is sent to the ARC server. If authentication is required then processing proceeds to step 194 at which an authentication of the user is carried out by the ARC server.

Referring back to Figure 5, if authentication is required then at step 256 it is determined whether the connected user is already registered with the interactive video service or not. If not, then processing proceeds to step 196 at which the user registers with the interactive video service. As illustrated in Figure 5, the ARC server receives a user name, password, and date of birth of the user. At step 260 it is determined whether the entered user name and password correspond to user names and passwords already present on the system in which case processing returns to step 258 and new user names and passwords are entered. If the user names and passwords are unique at step 262 it is determined whether the user name or password meets certain requirements in terms of length and their content and if not processing returns to step 258 and new user names and passwords are received. If the user name and password are acceptable then at step 264 a user account is set up with the status of the user marked as pending.

At some stage during the registration procedure an SMS message is received 266 from the player application which is intercepted by the ARC server and which confirms registration of the user. Then at 268 the ARC server sends an SMS message back to the player notifying the player that registration is complete. Then at step 270 the user registration status is updated from pending to full thereby completing the registration process. However, these processes can occur asynchronously from the rest of the process and do not need to be completed before processing proceeds to step 272.

If identification of the content to be viewed has not yet been sent then at step 198 the user can then send data identifying the content to be viewed to the ARC server.

If the user is already a registered user then processing proceeds directly to step 272 at which the ARC server authenticates the connected user by retrieving their user name and password from the user's table 116 of database 114 and also either receives the video content name or retrieves the video content name if received previously. If at step 274 the user is authenticated as their entered user name and password match the stored user name and password and the user's subscription to the service is currently live then at step 278 it is determined whether the selected video content requires payment. If it is determined that payment is not required then the authentication and registration process terminates at step 280. If payment is required for the content then at step 282 a payment routine is called to handle payment for the content.

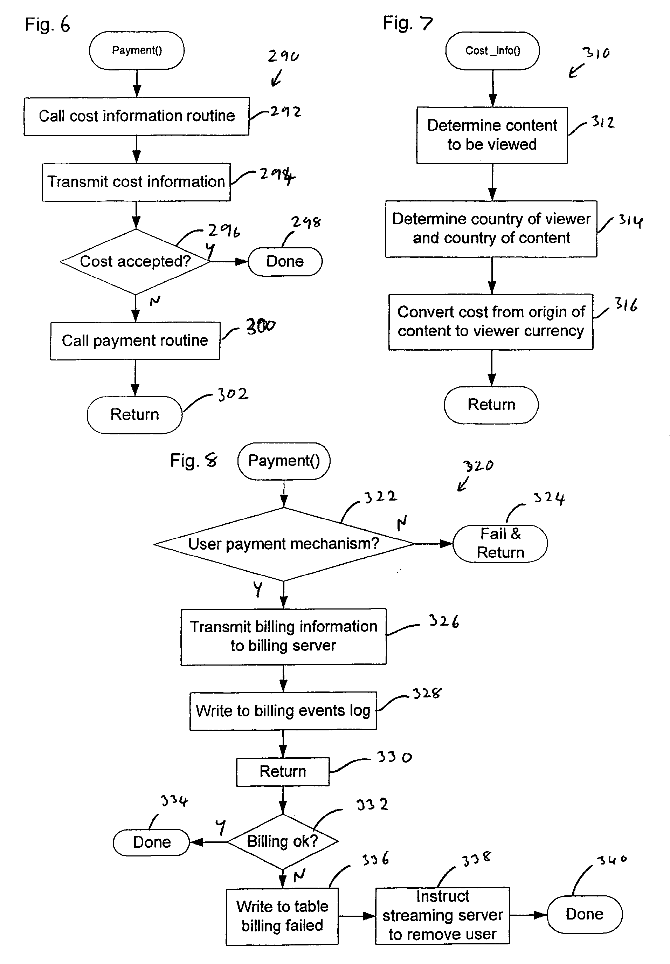

Figure 6 shows a process flowchart illustrating a payment processing process 290, corresponding generally to step 282 or Figure 5, in greater detail. At step 292, the payment processing routine determines the cost of the video content to be viewed. In particular, a cost calculation routine is called to calculate the cost associated with viewing the video content.

Figure 7 shows a process flowchart illustrating a cost calculation process 310, corresponding generally to step 292 or Figure 6 in greater detail. At step 312, the cost calculation routine looks up the content to be viewed by the viewer. Then at step 314, the routine determines the country in which the view is located and the country of origin for the video content. The cost of the content to be viewed is determined from the content table 120 in database 114 and is converted from the country of origin of the content to the country of the viewer to provide the cost in the currency of the viewer at step 316.

Processing then returns to step 294 at which the cost information is transmitted to the user's device and then displayed on the user's device. It is then determined whether the user accepts the cost for the video and if at step 296 data received from the user device indicated that the costs have not been accepted then processing terminates at step 298. If data is received indicating that the costs are accepted then processing proceeds at step 300 and a payment routine is called.

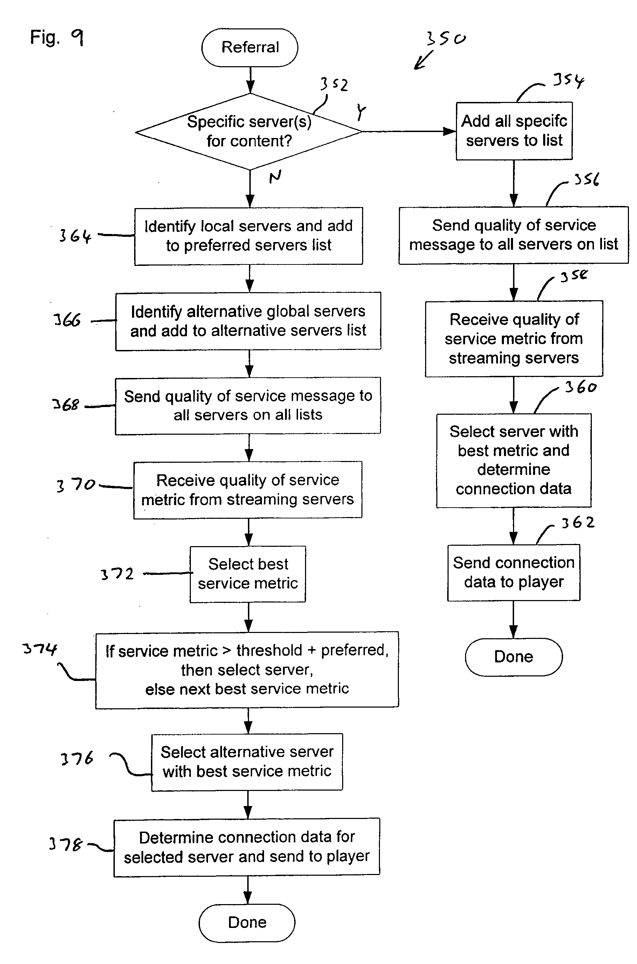

Figure 8 shows a process flowchart illustrating a payment process 320, corresponding generally to step 300 or Figure 6, in greater detail. At step 322, it is determined whether the user's table 116 of database 114 indicates that a payment mechanism is available for the user. If it is determined that no payment mechanism is available, then processing proceeds to step 324 and the payment mechanism fails. If it is determined that a payment mechanism is available then processing proceeds to step 326 at which billing information is sent to a billing server and at step 330 a billing events table in database 114 is updated to log the billing transaction. Prior to completion of the billing transaction by the billing server, processing returns to process 290 which then returns to step 280 of authentication registration process 250 and authentication registration of the user is completed. However, payment process 320 remains a background thread of processing and at step 332 it is determined whether the billing server has confirmed that the billing process was completed. If the billing process was completed successfully then processing proceeds to step 334 and the payment process 320 terminates. If billing was not completed, then at step 336 a billing events table is updated to reflect that the billing failed. Then at step 338 a command is generated and sent to the streaming server currently delivering the content in order to stop streaming content and remove the user from the system. Processing then terminates at step 340.

Various data items can be used in order to determine the cost of the video content. These can include, for example, the duration of the content, a rate per unit time for viewing the content, a currency associated with the origin of the content and whether charges for the content are made before or after viewing the content. This information is available in the content table 120 of database 114.

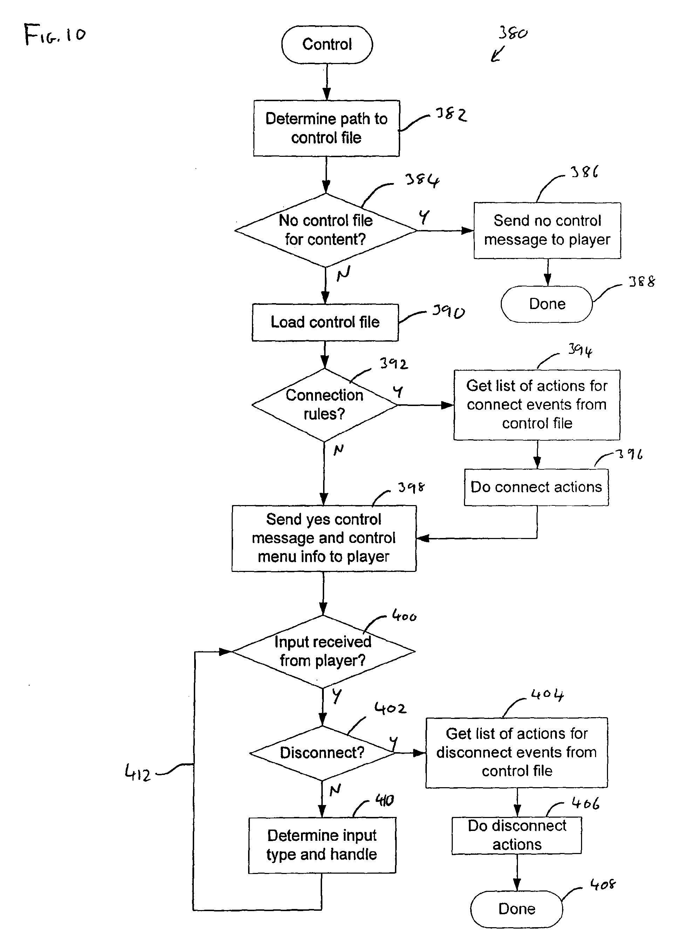

After completion of any authentication and registration of the user, step 162 of process 160 then at step 164, the ARC server moves into a referral mode of operation during which the server determines the most appropriate source of the video content to be viewed and redirects the player to connect to that source. Figure 9 shows a flowchart illustrating the referral process 350 in greater detail. At step 352, the referral process determines whether the selected content is only available on specific servers or whether it is available on all streaming servers or whether it is only available on a few of the streaming servers. If the content is available on specific servers only, then processing proceeds to step 354 and a list of the specific streaming servers having access to the content is generated. Then at step 356, the referral module sends a message to all of the servers on the list requesting that they return an indication of how well they would be able to service streaming of the requested video content.

In particular, a quantitative metric representing how well the server would be able to service a request is generated. The metric can be based on a number of factors, including the current number of connections to the streaming server, the size of files currently being streamed by the server, whether the server has local access to the content and the band width of the network over which the server would stream the video data. Any combination of these and other properties determining the quality of service that would be available from the server can be used to generate the quality of service metric. Then at step 358, the referral module receives quality of service metrics from the streaming servers and at step 360 the referral module selects the streaming server having the best metric and determines the IP address and port number to which the user device should connect. At step 362 that connection data is then transmitted to the user device.

Returning to step 352, if it is determined that the content is not server specific, at step 364 all streaming servers local to the ARC server are selected and added to a list of preferred servers. Then at step 366, any non-local streaming servers are identified and added to an alternative servers list. Then at step 368 the referral module sends a message to all the servers on both the preferred and alternative servers lists requesting them to return a quality of service metric. At step 370 quality of service metrics are received from the streaming servers. The quality of service metric is the same as that described above. Then at step 372 the referral module determines which server is likely to provide the best quality of service, based on the quality of service metric. Then at step 374 an algorithm is used to determine whether the best of the local servers can provide a sufficiently good quality of service and if not the best of the global servers is used. In greater detail, if the selected best service metric exceeds a user configurable threshold and if that server is on the preferred servers list then that server is selected as the server to stream the video content. If not, then the next best service metric for all servers is identified and the same determination is made again. If none of the local servers have a service metric meeting the threshold then at step 376 the global server on the alternative servers list having the highest service metric is selected as the streaming server for the content. Then at step 378, for the selected server, the IP address and port number are determined and sent to the player. This completes the referral stage of the ARC server's activity.

Returning to Figure 4, at step 200 the player receives and stores the connection IP address and port number and also a unique identifier for the current session which was generated by the ARC server.

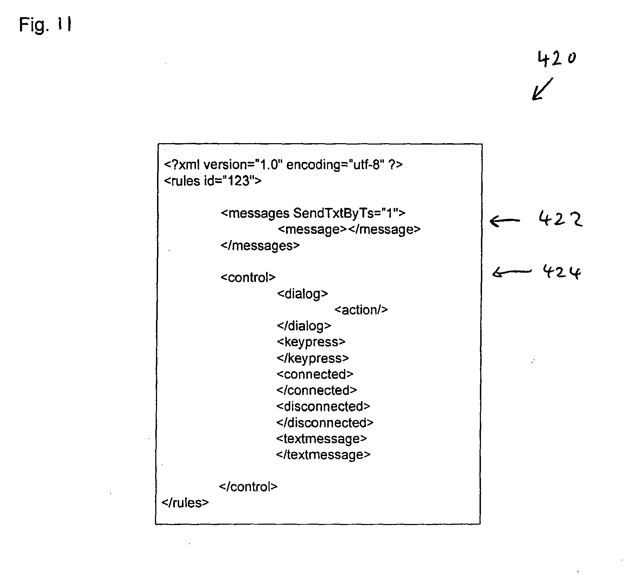

Meanwhile, the ARC server proceeds to the control phase of its operation, as indicated generally by step 166 of Figure 3. Figure 10 shows a process flowchart illustrating a control process 380 carried out by the ARC server 112 in greater detail. At step 382, the control module determines the path to the control file 124 associated with the selected video content. A look-up is carried out on content table 120 of database 114 to determine the path to the control file for the selected content. If it is determined at step 385 that there is no control file for the content, as the path to the control file is absent, then at step 386 a message is sent to the user device indicating that the video is not interactive and the control process then terminates at step 388. If at step 384 it is determined that there is a control file then at step 390 the control file 124 is loaded from file server 122 into ARC server 112. Figure 11 shows a schematic representation of the data structure of a control file 420 which will be described in greater detail below. At step 392, a connection part of the control file is read by the ARC server to determine whether there are rules governing connection of the user device to the streaming server. If connection rules do apply then processing proceeds to step 394 at which a list of actions to be carried out in connecting the user device to the streaming server is obtained from the control file and at step 396 those connection actions are carried out.

Once the connection actions are completed, or if there are no connection rules, then processing proceeds to step 398 at which data is sent to the user device indicating that the video to be displayed is interactive and also sending control menu information to the user device so that a menu of control functions can be displayed by the player to the user.

Returning to Figure 4, at step 202, the player determines whether the video content is interactive depending on the data received from the ARC server. If the player has received an indication that the video is not interactive then processing proceeds to step 204 and the user device can disconnect from the ARC server as no further interaction with the ARC server is required. Processing then proceeds to step 206 at which the player receives the control menu information from the ARC server and displays the control information to the user. Then at step 208, the player causes the user device to connect to the appropriate streaming server using the IP address and port number received at step 200. At step 210 various hand shaking and authentication operations can be carried out with the streaming server and then at step 212, the device starts to receive the streamed video data which is decoded and displayed by the player at step 212. At step 214, the user can operate the keys to select various interactive functions by user interface entities, such as dialogue boxes, lists, menus and other similar data input entities. At step 216 it is determined whether the video has ended or whether the user has otherwise stopped the video display and if not then processing loops, as indicated by line 218 and the video is continuously displayed and the user can interact with the displayed video. Once the video has ended processing terminates.

As mentioned previously, any key press data entered by the user, and the time at which the key press was made during the video display, is transmitted from the user device to the ARC server at step 400 to determine whether any key press data has been received by the ARC server. If not, then the ARC server merely waits until key press data is received. If key press data is received then at step 402 it is determine whether the key press data corresponds with an instruction to disconnect the user device from the streaming server. If so, then the control file is read by the ARC server to determine whether there are any disconnection rules. If there are disconnection rules in the control file then processing proceeds to step 404 and a list of actions to be carried out by the control server is obtained from the control file and at step 406 the disconnection actions are carried out and processing terminates.

If the key press or other input received from the user device does not correspond to the disconnection command then at step 410 the control server determines the type of input and reads the control file to determine what actions are required in response to the current input. Processing then loops, as indicated by line 412 to determine whether further input has been received from the user device.

Figure 11 shows a schematic representation of the data structure of the control file 420. A control file is associated with each item of video content and defines the rules governing what action the ARC server should carry out in response to any user input and also what messages the streaming server should send to the player for display. In one embodiment the control file is an XML file. The control file includes a messages section 422 and a control section 424. Hence, the general format of the control file is:

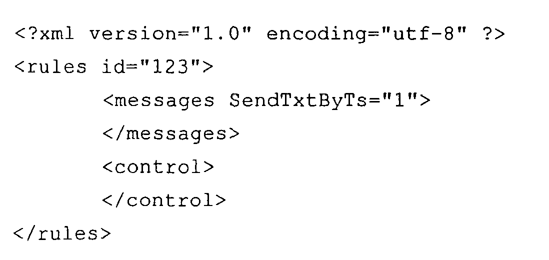

The messages node or part 422 contains messages to be sent to the player and is used by the streaming server. The control node or part 424 is used to handle data sent from the player as a result of user input or interaction with the player, and is used by the ARC Server. Each part of the control part can define various actions to be carried out.

The <messages> tag can have the attribute SendTxtByTs set to 1 or 0. Set to 1 means that the time specified with the message is the timestamp of the frame to show the message with. Set to 0, means the second after streaming has begun to send the message, regardless of players position in the stream.

Inside the messages part are message nodes, eg.

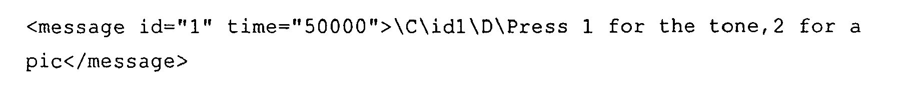

The message body can contain formatting to dictate how the message is displayed. This can mean as a dialog, banner or footer to the video, a confirmation box, a selection box, and edit box or a numeric edit box. Details of the formatting are described below. In this case, a dialogue box message, the id is not significant and the id is just a dummy. The time data is in ms and is used by the streaming server to determine when to send the message and also by the player to determine when to actually display the message. the server sends the message when the timestamp in the video being streamed matches the time and the player actually displays the message when the timestamp of the video being displayed matches the time.

Inside the control part or node can be nodes that represent the various actions to be performed on certain events. These events are keypress, message entry, responses to input capable messages (dialogs), connection and disconnection from the stream.

The dialogue node or part resides inside the control part and deals with the responses to displayed messages that can accept input and form part of a dialogue. They have the format, for example, of:

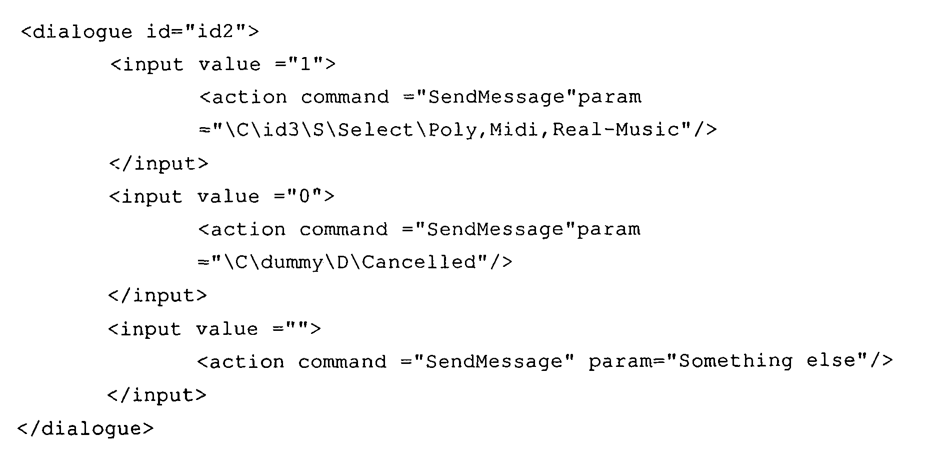

The id attribute represents the id of the message that caused a dialogue input type to be displayed, and the user to enter/select a response. The input nodes compare the value received from the dialogue. In the above example, the SendMessage command is carried out with different parameters depending on whether the "1", "0" or no key was pressed. In the case of a selection box, the values are the indexes of the items in the list. In the case of a yes/no box, the input values are either 1 or 0. In edit and numeric boxes, the value will be that typed in. An input value of "*" can be used to represent a default if none of the others match. Inside the input nodes are one or more action nodes which are described later.

The keypress node or part resides in the control node and deals with key presses on the device user device. Their format is, for example, as follows:

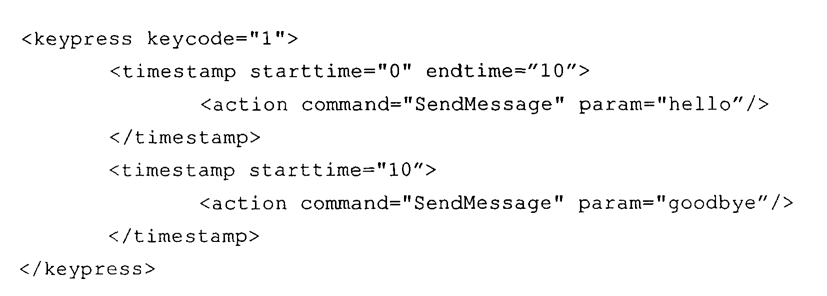

In the above example, pressing the "1" key between 0 and 10 seconds causes the message "hello" to be displayed and pressing the "1" key after 10 seconds causes the message "goodbye" to be displayed. In general, the keycode is the character of the keypress (0-9). The timestamp node within specifies the time restrictions that the keypress applies to. The endtime is optional if the keypress event is applicable anytime after the start time. Hence, the following format is also valid:

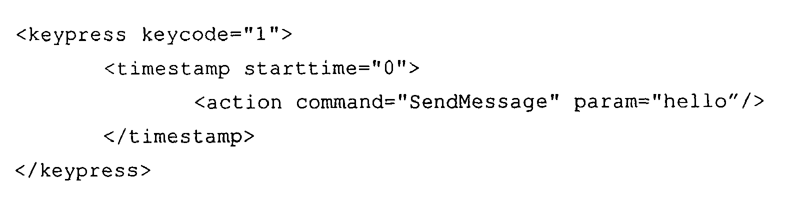

Within the timestamp node is one or mode action modes, which will be explained later.

The connected part or node also resides inside the control node and specifies the actions to be performed when a player connects to a video stream. For example, it can have the format:

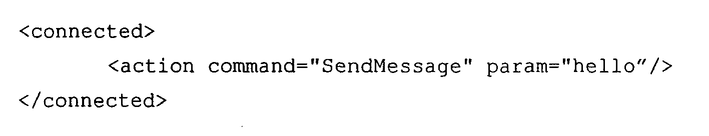

Within the connected node are one or more action nodes.

The disconnected part or node also resides inside the control node and specifies the actions to be formed when a player disconnects from the stream. For example, it can have the format:

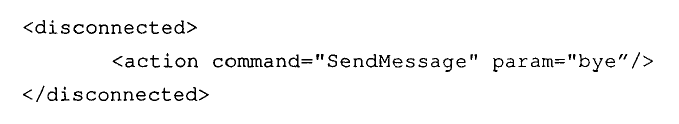

Within the disconnected node are one or more action nodes.

The textmessage part or node resides inside the control node. These are user initiated text messages sent from within the player. For example, they can have the format:

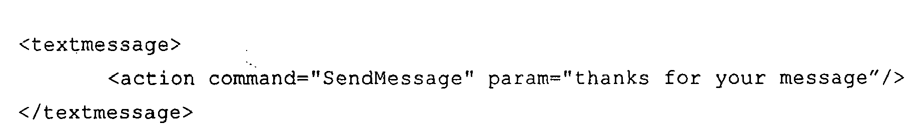

The action node is used inside each of the dialogue, keypress, connected, disconnected and textmessage nodes. It represents an action, or multiple actions to be performed, for example:

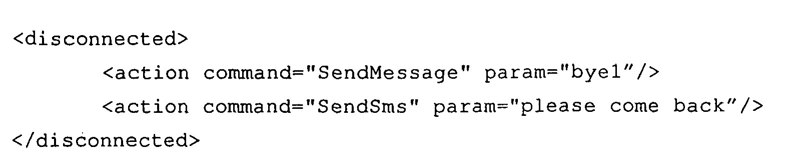

This combination of actions would cause a bye 1 message to be sent to the player and also an SMS message containing "please come back" to the users phone, on disconnecting from the video stream.

The action node can either perform local or native actions which are built into ARC the arc server or custom or non-native actions which are loaded from plug ins at run-time. All the examples shown so far have used local actions.

The following local actions can be used:
SendMessage: Which sends a message back to the player and uses the same message formatting as in the messages node.
ChangeContent: Which tells the ARC server to change the content being viewed to another file, specified by the param.
ChangeContext: Is similar to changecontent, but also take into account any differences in charging for the video content.
ChangeCamera: Which tells the encoder to change to a different input source.
Log: Which just logs a message to a file
SendSMS: Which sends an sms message to the user
SendMessage: Which sends a message back to the user using the message formatting.

Non-native or Plugin actions allow methods in dynamically loaded dlls to be called. The action node needs additional parameters to specify the location of the dll, and the method to call, *e.g.*:

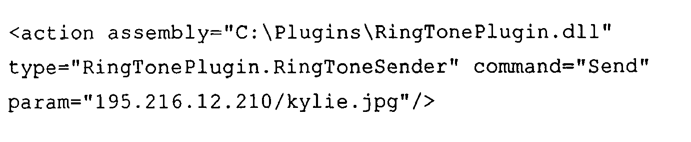

The format of the message sent in either the messages from the streaming server, or the SendMessage local action from the ARC server, can contain formatting information to dictate how the content of the message appears to the client. The default option is that A message with no formatting information appears at the top of the display screen, in red on a black background, for 5 seconds or until replaced with another message.

This 'border' style of simple message is formatted by sending alphanumeric strings, of the following format:
\<location>\<message color>\<background color>\<style>\<seconds>\<message>
where <location> is either "t" for top or "b" for bottom of the screen, message color and background color are integers representing the color of the text or background border respectively, style can be an integer used to specify a style of the display, seconds is the number of seconds to display for, and message is the message body. For example:
\b\255\0\1\10\hello
shows "hello" at the bottom of the screen in red, on a black background, for 10 seconds.

The other type of formatted message are dialogue style messages. They start with \C\id. The ID field is set to allow the message to be tied up with a corresponding dialogue node in the control file. Hence, when a dialogue is begun with a dialogue style message, the next message to display in the dialogue can be determined based on the ID field. The remainder of the message differs depending on the dialogue message type.

For the Dialogue Box message type, the message is shown in a popup dialogue box and has the format: \C\id\D\message. For the Confirmation Box message type, the message is shown with a yes/no choice to which the users selected option is returned to the ARC server. They have the format: \C\id\C\confirm purchase?. For the Selection Box message type, the message is shown with multiple choices and the index of the option chosen by the user is returned to the ARC server. They have the format: \C\id\S\title\iteml,item2, item3. For the Edit Box message type, the message is shown with a text edit box. The text entered by the user is returned to the ARC server and they have the format:
\C\id\E\header. For the Numeric Box message type, the message is shown as a box with a numeric entry field and the value entered by the user is returned. They have the format: \C\id\N\header.

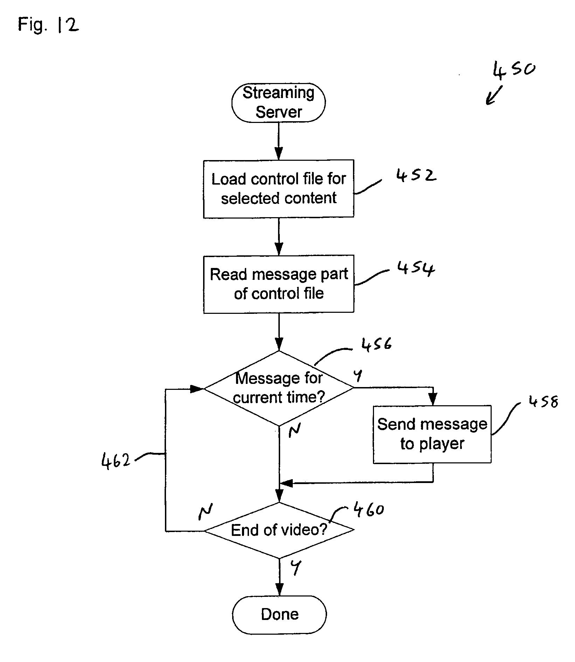

Referring now to Figure 12, there is shown a process flowchart illustrating a messaging process 450 carried out by the streaming server while it streams video data to the user device. Prior to initiating streaming of the video data, at step 452, the streaming server loads the control file for the selected content. The streaming server determines the control file to load by carrying out a look-up in the content table 120 of database 114 and having the file server 122 transfer the appropriate control file 124 to the streaming server. Then at step 454, the streaming server reads the message part of the control file. The streaming server can determine the current time stamp for the video data being streamed to the user device. Then at step 456 the streaming server determines whether the message part of the control file indicates that a message should also be sent to the player for display on the screen, based on the current time stamp. If it is determined that a message should be displayed then this processing proceeds to step 458 at which a streaming of characters defining the message to be displayed by the player is generated and sent to the user device. Either way, processing eventually proceeds to step 460 at which it is determined whether the end of the video data has been reached. If not then processing loops as illustrated by line 462 and the streaming server continues to monitor the current time stamp of the streamed video to determine whether a message should be displayed. When it is determined at step 460 that the video has ended then the streaming server process terminates.

The messaging information sent to the player includes both content for the message and also formatting for the message determining how that content should be displayed. For example the message can be simple text, such as a title, and include the format in which the text is to be displayed. A message can define a text box or data entry field, or other user interface entity, into which the user can enter information or from which the user can select an option or enter a command. The message can be in the format of a menu or list from which various items can be selected by the user. The message can define the format of a yes/no box. The message can be in the format of a message overlayed over the video into which the user can enter a textural message to be transmitted to the system. Any of the messages allowing for user reply include a data item identifying the dialogue, or stage of the dialogue, of which the message is a part.

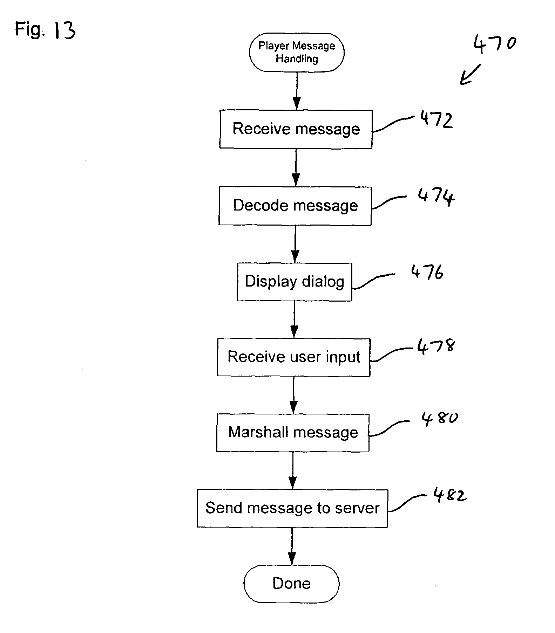

Figure 13 shows a process flowchart illustrating a message handling process 470 carried out by the player and the user device. At step 472, the player receives the message which is in the format of an alpha numeric string which defines both the content of the message and the format in which the message is to be displayed by the player. Formatting information can include how a text is to be displayed, whether it is to be presented as a header or footer, the font, the size and the colour of the text to be displayed. The alpha numeric string entirely defines the user interface element which is to be displayed to the user by the player, as described above. At step 474, the player decodes the alpha numeric string to determine the content and format of the entity to be displayed and at step 476 the user interface entity, or dialogue element, is displayed to the user by the player. At step 478 any user input is received. For example the user may press a y or n key to accept or refuse an option. Alternatively, the user may select an element from a list. Alternatively, or additionally, the user may enter a text message. Then at step 480, the key press information is marshalled into an alpha numeric string which includes a data item identifying the step of any dialogue with which the message is associated, and the message is transmitted to the Arc server at step 482 for handling.

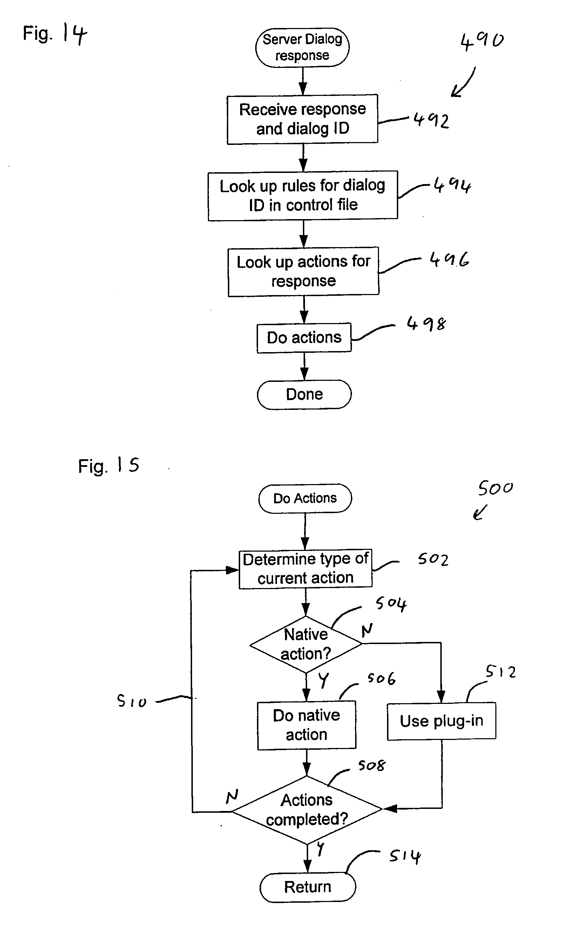

Figure 14 shows a process flowchart illustrating a dialogue response handling process 490 carried out by the server when it receives a response to a dialogue message. At step 492, the ARC server receives the key press data or text data and the dialogue item identifier transmitted from the user device. Then at step 494, the ARC server looks up in the control file the rules associated with the dialogue ID returned by the user device. Then at step 496, the ARC server determines the list of actions associated with the identified step of the dialogue and at step 498 each of the identified actions is carried out.

Figure 15 shows a process flowchart illustrating a do actions process 500 carried out by the ARC server. At step 502, the ARC server determines the type of the current action. Examples of the types of action that can be carried out have been described above in connection with the description of the control file. The ARC server determines the type of the current action by determining whether a plugging name is associated with the action being currently assessed. If no plug in name is associated with the action, then at step 504 it is determined that the action is a native action, that is an action that the ARC server can carry out itself. Processing then proceeds to step 506 at which the ARC server carries out the action. It is then determined at step 508 whether all the actions for the current list of actions have been completed. If not then processing returns to step 502 as indicated by line 510.

If at step 504 it is determined that the action is not native to the ARC server then processing proceeds to step 512 at which the non-native action is carried out using a plug in. Processing then proceeds to step 508 and continues as described above until all the actions in the current list have been completed, following which the process terminates at step 514.

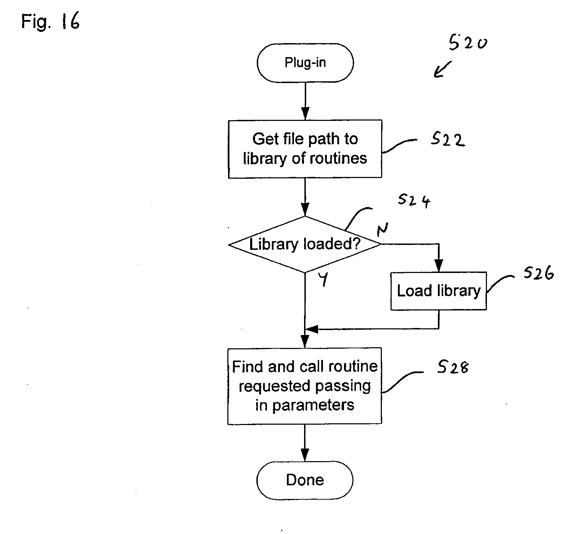

Figure 16 shows a process flowchart illustrating a process 520 for using a plug in to carry out a non-native action, corresponding generally to step 512 of Figure 15. At step 522, the ARC server determines the file path to the library of routines including the routine required to carry out the non-native action. At step 524, it is determined whether the library of routines is currently loaded into memory on the ARC server and if not processing proceeds to step 526 at which the appropriate library is loaded. When, or if, the appropriate library is loaded, processing proceeds to step 528 at which the method required by the non-native action is found in the loaded library and routine is called passing in any parameters required by the routine and any auxiliary data required or handling the results of the routine, such as data identifying the connected user and the phone number of the connected user. The called routine then carries out its action. The results of any action are then returned to the control server or directly to the user device, depending on the action called.

For example if the called routine is a payment method then the routine may simply execute the payment method and if the payment is successful then no result may be required. However, if the payment is not successful then the result of carrying out that method may need to be handled by the control server or the streaming servers in order to prevent further viewing of the associated content. Alternatively, the payment method may be used to charge the user for goods associated with the interactive video and purchased by the user while viewing the interactive video.

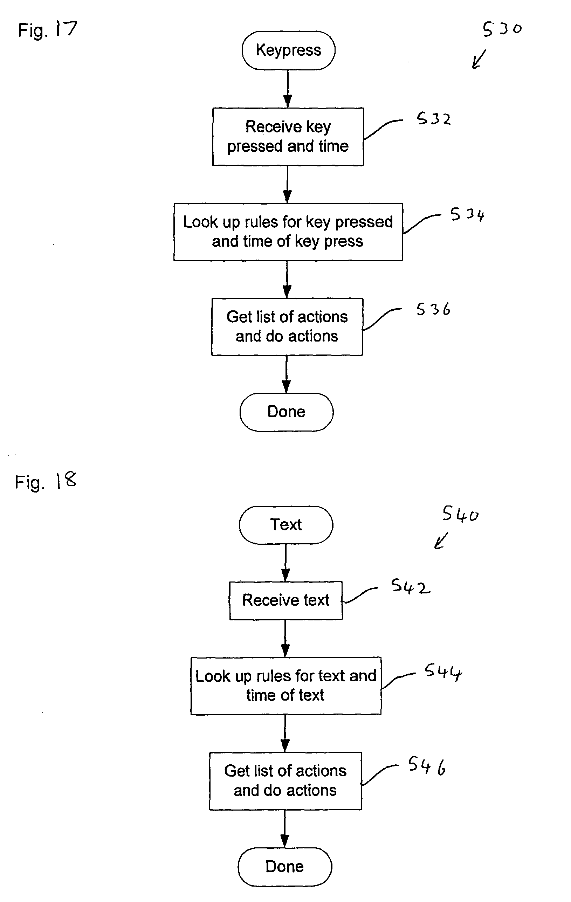

Figure 17 shows a process flowchart illustrating a key press handling process 530 carried out by the ARC server. At step 532, the ARC server receives a control signal from the user device which includes the key that was pressed on the user device and the time during the display video at which the key was pressed. At step 534 the ARC server looks up in the control file the rules associated with key press events and in particular the rules associated with the particular key that was pressed. The control server then also looks up the rule associated with that particular key for the time at which the key was pressed. As explained above, the same key can initiate different actions depending on the time during the video at which the key was pressed. At step 536 the control server gets the list of actions from the control file and carries out the actions using the do actions process 500 as illustrated in Figure 15.

Figure 18 shows a process flowchart illustrating a text handling process 540 carried out by the ARC server. At step 542, the ARC server receives as text message from the user device, for example as entered into a data entry field displayed on the user device. In the current context, the text message is not being used to refer to SMS messaging, but rather to a textural message entered into and handled by the player application. Based on the format of the incoming data, the control server determines that the current user input corresponds to a text message and accesses the text message part of the control file to determine what actions to carry out for a text message for the time at which the text message was entered. At step 546 the ARC server gets the list of actions and executes those actions according to the do actions process 500 illustrated in Figure 15.

At some times, the video being displayed on the user device can lag behind the video being streamed to the user device in real time. The ARC server can carry out a process to cause the video being displayed to catch up with the video being sent. The ARC server calculates the delay time by which the video being displayed on the player lags the real time of the live video being sent to the player. If the delay time exceeds a threshold value calculated as the sum of a live stream delay, and intra frame frequency and a round trip delay, then a live catch up process is carried out. The ARC server sends a command to the player to clear any buffers it has and the streaming server is instructed to start sending data from the original delay behind real time, which is the live stream delay and somewhere between zero and the intraframe frequency. For example, if the initial delay when streaming commences is set to 1 second, owing to internal buffering of video data, and if GPRS network delays occur resulting in the delay increasing to 5 seconds, then the ARC server issues an instruction to the player to clear its video buffers and then streaming recommences, but with the initial delay of 1 second.

An example application of the general invention will now be described in relation to purchasing a wallpaper or ring tone associated with a video being displayed on a mobile phone. There follows a control file, in XML, implementing this application:

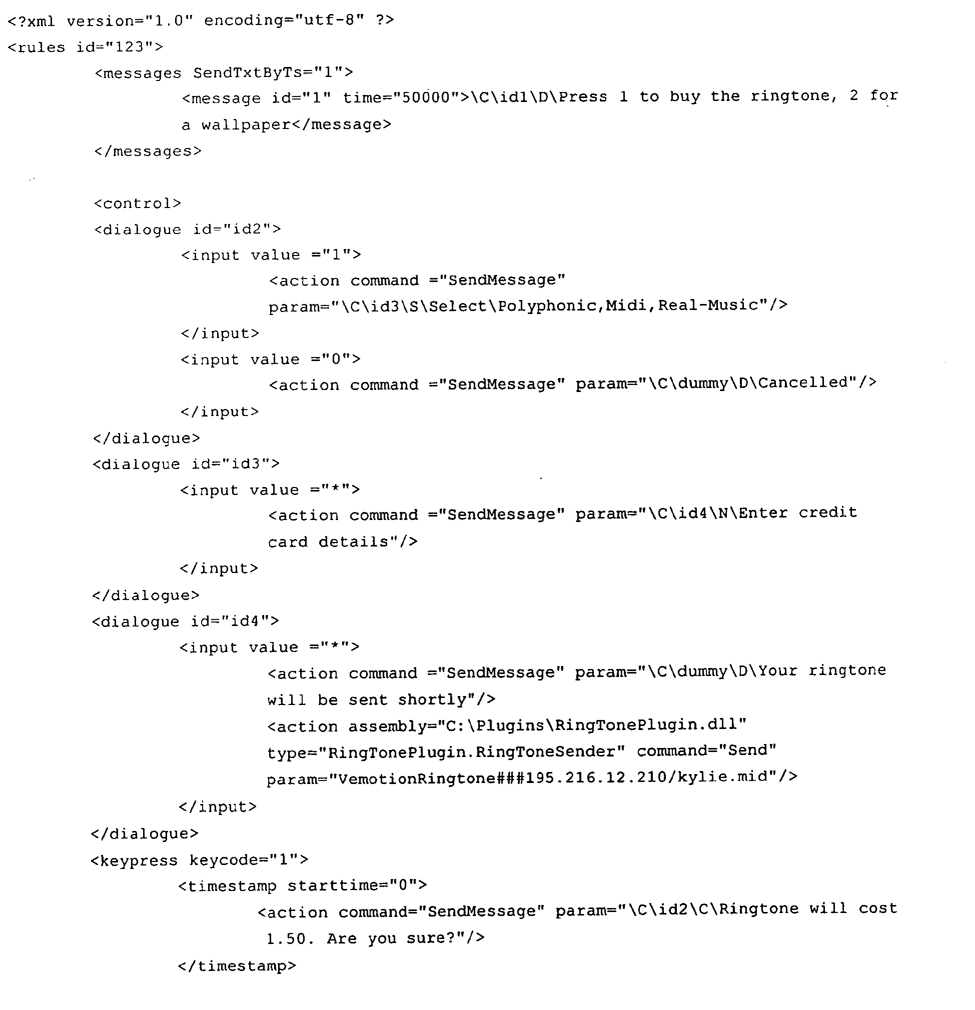

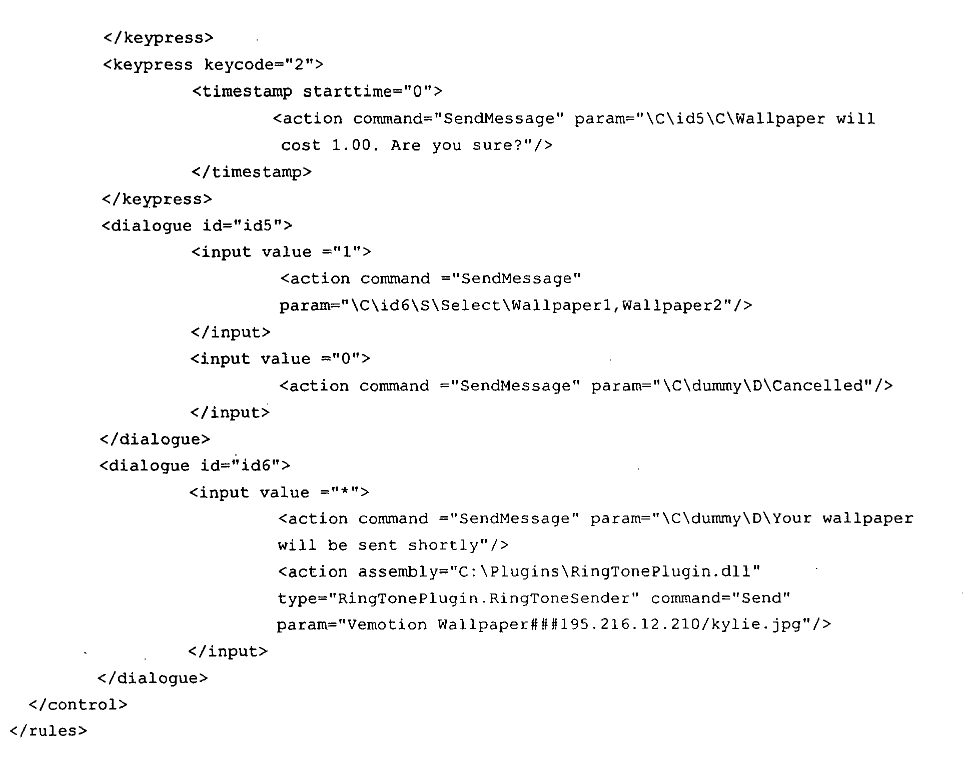

In this example, the user has selected to view a music video and the above control file is associated with the music video and is loaded onto the ARC server and streaming server that streams the video content to the player. The streaming server reads the messages section and after 50000 ms sends the message "Press 1 to buy the ringtone, 2 for a wallpaper" and initiates a dialogue. The player receives the message and also the timestamp information and waits until the time stamp of the video currently being displayed corresponds to the received time stamp before displaying the message. Hence, the message is displayed in synchrony with the time of the video at the video player. If the "1" key is pressed, then the first keypress part causes a confirmation dialogue box with message "Ringtone will cost 1.50. Are you sure?" to be displayed and identifies id2 as the next dialogue to go to if input "1" is received as confirmation. If confirmed, then a selection box type message is sent with the options: Polyphonic, Midi, Real-Music, and identifying dialogue id3 as being the next part of the dialogue, if "*" is entered to select one of the three options. Dialogue id3 then causes a numeric box type message to be sent to the player and to display "Enter credit card details", accept numeric values, and identify id4 as the next stage of the dialogue. Finally dialogue id4 firstly sends the message "Your ringtone will be sent shortly" and then causes the plugin method
RingTonePlugin.RingToneSender located at C:\Plugins\RingTonePlugin.dll to send the ringtone specified by the parameter Vemotion Ringtone###195.216.12.210/kylie.mid.

As well as merchandising applications there are many other applications in which the benefits of the present invention can be used. The invention can be of benefit in any application in which the user wants to control or cause an operation in response to video content being displayed to the user on their communications device. Other examples applications would include, for example, allowing a user to place bids for items being shown during an auction television program, voting during a reality television program and voting on video clips from a dating or match making service. A further application would be to facilitate gambling by providing live or recorded video footage of a gambling event, such as horse racing, a cards game, roulette, *etc.,* and then allowing users to place bets by using user interface entities to select what outcome to bet on, the odds and to receive payment data, such as credit or charge card details.

Another application would be live video with instant two way messaging. The subject would have their image captured by a camera and the live video feed is fed to an encoder for streaming to the user device. The subject can enter message text to the streaming server or control server via an input device, such as a key board, which are then automatically sent to the user device according to the text messaging process described above. The message is then displayed to the user and the user can enter a reply message which is then sent back to the ARC server which causes the message to be displayed on a display device visible to the subject. Hence, live video of the subject can be viewed on the user device while allowing real time messaging between the subject and user. The user can also enter control commands to control the camera and/or to select to use a different camera to view the subject.

Generally, embodiments of the present invention, and in particular the processes carried out by the user device and by the ARC server employ various processes involving data stored in or transferred through one or more computer systems. Embodiments of the present invention also relate to an apparatus for performing these operations. This apparatus may be specially constructed for the required purposes, or it may be a general-purpose computer selectively activated or reconfigured by a computer program and/or data structure stored in the computer. The processes presented herein are not inherently related to any particular computer or other apparatus. In particular, various general-purpose machines may be used with programs written in accordance with the teachings herein, or it may be more convenient to construct a more specialized apparatus to perform the required method steps. A particular structure for a variety of these machines will appear from the description given below.

In addition, embodiments of the present invention relate to computer readable media or computer program products that include program instructions and/or data (including data structures) for performing various computer-implemented operations. Examples of computer-readable media include, but are not limited to, magnetic media such as hard disks, floppy disks, and magnetic tape; optical media such as CD-ROM disks; magnetooptical media; semiconductor memory devices, and hardware devices that are specially configured to store and perform program instructions, such as read-only memory devices (ROM) and random access memory (RAM). The data and program instructions of this invention may also be embodied on a carrier wave or other transport medium. Examples of program instructions include both machine code, such as produced by a compiler, and files containing higher level code that may be executed by the computer using an interpreter.

A typical computer or computer system that, when appropriately configured or designed, can serve as the user device or parts of the platform can include any number of processors (also referred to as central processing units, or CPUs) that are coupled to storage devices including a first primary storage (typically a random access memory, or RAM), a second primary storage (typically a read only memory, or ROM). The CPU may be of various types including microcontrollers and microprocessors such as programmable devices (e.g., CPLDs and FPGAs) and unprogrammable devices such as gate array ASICs or general purpose microprocessors. As is well known in the art, second primary storage acts to transfer data and instructions uni-directionally to the CPU and first primary storage is used typically to transfer data and instructions in a bi-directional manner. Both of these primary storage devices may include any suitable computer-readable media such as those described above. A mass storage device can also be coupled bi-directionally to CPU and provides additional data storage capacity and may include any of the computer-readable media described above. The ass storage device may be used to store programs, data and the like and is typically a secondary storage medium such as a hard disk. It will be appreciated that the information retained within the mass storage device, may, in appropriate cases, be incorporated in standard fashion as part of primary storage as virtual memory. A specific mass storage device may also be included such as a CD-ROM which may also pass data uni-directionally to the CPU.

The CPU can also be coupled to an interface that connects to one or more input/output devices such as such as video monitors, track balls, mice, keyboards, keypads, microphones, touch-sensitive displays, transducer card readers, magnetic or paper tape readers, tablets, styluses, voice or handwriting recognizers, or other well-known input devices such as, of course, other computers. Finally, the CPU optionally may be coupled to an external device such as a database or a computer or telecommunications network using an external connection, such as a network interface card. With such a connection, the CPU can receive information from the network, or can output information to the network in the course of performing the method steps described herein.

Although the above has generally described the present invention according to specific processes and apparatus, the present invention has a much broader range of applicability. The invention can be used in any application in which it would be beneficial for a user to control or cause an action based on video being displayed to a user. It will be appreciated that the process flow charts and architectures shown in the Figures are by way of illustration and explanation of the invention only and, unless the context requires otherwise, the specific details of the Figures should not be construed as limiting. For example, various combinations of data processing steps can be used and the order of the operations illustrated in the Figures can be altered and the operations can be broken down into sub-operations or combined into more general operations. One of ordinary skill in the art would recognize other variants, modifications and alternatives in light of the foregoing discussion.

## Claims

1. A computer implemented method for providing interactive video on a user communication device, comprising:
identifying an item of video content to be displayed on the user device;
determining a control file associated with the item of video content;
receiving a control command from the user device while the video content is being displayed on the user device;
reading the control file to determine an action to be carried out based on the control command received; and
causing the action to be carried out.

2. The method of claim 1, and further comprising notifying the user device of a source of the item of video content to be displayed.

3. The method of claim 1, wherein the control command includes a key press data item corresponding to a key pressed by the user and/or a key press time data item corresponding to the time during display of the video at which a key was pressed by the user.

4. The method of claim 1, and further comprising:
reading the control file to determine a time during display of the video at which to send a message to the user device; and
sending the message to the user device at the time.

5. The method of claim 1, wherein the action comprises sending a message to the user device.

6. The method of claim 4 or 5, wherein the message includes a message body and formatting data specifying how the message body should be displayed.

7. The method of claim 6, wherein the message specifies a user interface entity to be displayed on the user device.

8. The method of claim 6, wherein the message is a part of a dialogue and the control file specifies what subsequent messages to send during the dialogue dependent on received user input.

9. The method of any preceding claim, and further comprising:
determining the type of the action; and
if the action is an action that can be carried out by native routine, then the native routine carrying out the action, else determining the location of a routine which can carry out the action and calling the routine to carry out the action.

10. The method as claimed in any preceding claim, wherein the control file has a first section specifying rules that are applied to send messages to the user device and a second section specifying rules that are applied in handling user inputs received from the user device.

11. The method as claimed in any preceding claim, and further comprising:
determining which of a plurality of video sources should act as the source of the video content to be sent to the user device; and
sending connection data to the user device identifying the address of the video source to which the user device should connect over a network.

12. The method as claimed in claim 11, wherein determining further comprises selecting a video source being most likely to provide the highest quality service of the video content to the user device.

13. The method as claimed in claim 12, wherein selecting further comprises:
determining whether all video sources have access to the item of video content;
if so, then selecting the video source having a quality of service metric exceeding a threshold and being local to the user device, else selecting the video source having a highest quality of service metric but not being local to the user device;
if not, then selecting the video source having a highest quality of service metric.

14. The method as claimed in any of claims 11 to 13, and further comprising:
making the control file available to the video source acting as the source of the video content to be sent to the user device.

15. A computer implemented method for displaying interactive video on a user communication device, comprising:
receiving encoded video data from a source of video content over a network;
decoding the video data and displaying the video content;
receiving a user key press input and sending user input data including at least the key pressed over the network to a controller;
receiving control data over the network; and
altering the displayed video as specified by the received control data.

16. The method as claimed in claim 15, wherein altering the displayed video comprises changing a property of the video content being displayed.

17. The method as claimed in claim 15 or 16, wherein altering the displayed video comprises adding a user interface entity to the video being displayed.

18. The method as claimed in claim 17, further comprising;
receiving further user key press input responsive to the user interface entity; and
sending user input data including at least the further key press data or an alphanumeric string over the network to the controller.

19. The method as claimed in any of claims 15 to 18, and further comprising:
receiving connection data over the network identifying the source of video content; and
connecting the user device to the source of video content over the network, using the connection data.

20. An interactive video platform for providing interactive video on a user device over a network, the interactive video platform being configured by computer program code to:
identify an item of video content to be displayed on the user device;
determine a control file associated with the item of video content;
receive a control command from the user device while the video content is being displayed on the user device;
read the control file to determine an action to be carried out based on the control command received and cause the action to be carried out.

21. The platform as claimed in claim 20, and further comprising a plurality of streaming servers in communication with the network for streaming encoded video data over the network.

22. The platform as claimed in claim 20 or 21, and further comprising a source of live video content.

23. The platform as claimed in any of claims 20 to 22, and further comprising a store of pre-recorded items of video content.

24. The platform as claimed in any of claims 20 to 23, and further comprising a control file for each item of video content.

25. The platform as claimed in claim 21, wherein some of the plurality of streaming servers are local to the control server and the rest are not local to the control server.

26. The platform as claimed in any of claims 21 to 25, wherein each streaming server has access to the control files associated with the items of video content that an individual streaming server can supply.

27. A user communication device for displaying interactive video, comprising a display and an interactive video player implemented by a data processor configured by computer program code to:
receive encoded video data from a source of video content over a network;
decode the video data and display the video content to a user;
receive user key press input and send user input data including at least the key pressed over the network to a controller;
receive control data from the controller over the network; and
alter the displayed video as specified by the received control data.

28. Computer program code executable by a data processing device or devices to provide the method of any of claims 1 to 19, the platform of any of claims 20 to 26 or the device of claim 27.

29. A computer program product, comprising a computer readable medium bearing computer program code as claimed in claim 28.
